# EUROPÄISCHE PATENTSCHRIFT

(11) **EP 0 739 464 B1**
(45) Veröffentlichungstag und Bekanntmachung des Hinweises auf die Patenterteilung: **09.04.1997**
(21) Anmeldenummer: 95904380.3
(22) Anmeldetag: 27.12.1994
(51) Int. Cl.: F16H 57/02, H02K 7/116

(54) **AN EINEN ELEKTROMOTOR ANFLANSCHBARES GETRIEBE**
GEAR WHICH CAN BE FLANGED TO AN ELECTRIC MOTOR
ENGRENAGE POUVANT ETRE FIXE PAR UNE BRIDE SUR UN MOTEUR ELECTRIQUE

(30) Priorität: 17.01.1994 DE 4401164
(43) Veröffentlichungstag der Anmeldung: 30.10.1996
(73) Patentinhaber: Alpha Getriebebau GmbH, D-97999 Igersheim (DE)
(72) Erfinder: WITTENSTEIN, Manfred, D-97980 Mergentheim (DE); WOLFART, Manfred, D-97990 Weikersheim (DE)
(74) Vertreter: Patentanwalts-Partnerschaft Rotermund + Pfusch
(86) Internationale Anmeldenummer: DE9401536
(87) Internationale Veröffentlichungsnummer: WO9519514

(56) Entgegenhaltungen:
- EP-A- 0 381 829
- EP-A- 0 567 048
- US-A- 4 111 069
- US-A- 5 052 842

## Beschreibung

Die Erfindung betrifft ein an einen Elektromotor angeflanschtes Getriebe, insbesondere ein spielarmes Planetengetriebe, nach dem Oberbegriff des Patentanspruchs 1.

Bei derartigen bisher bekannten Getrieben ist bei einer direkten Anflanschung der Elektromotor jeweils radial an dem Getriebe-Flansch zentriert, wozu ein in dem einen der beiden Teile angebrachter Zentrierbund in eine entsprechende Innenzentrierung des anderen Teiles paßgenau eingreift.

Bei einer derartigen Zentrierung kann es bei ungünstig zusammentreffenden Fertigungstoleranzen der Zentrierflächen zu einer verspannten Lagerung der Elektromotor-Abtriebswelle gegenüber der diese aufnehmenden Hohlwelle kommen. Außerdem ist das Herstellen der betreffenden Zentrierflächen mit einem hohen Fertigungsaufwand verbunden.

Aus EP 0 381 829 A1 ist es ferner bekannt, den Elektromotor über ein elastisches mehrteiliges Verbindungselement an das Getriebe anzuflanschen und innerhalb der Einzelteile dieses Elementes radial zentrierungsfreie Anlagen vorzusehen. Diese Verbindungsart ist konstruktiv aufwendig und führt zu einer an sich unerwünschten Vergrößerung der Baulänge der aus Motor und angeflanschtem Getriebe bestehenden Baueinheit.

Hier eine Verbesserung sowie Vereinfachung der Konstruktion und Fertigung zu schaffen, ist das Problem, mit dem sich die Erfindung in erster Linie beschäftigt.

Eine Lösung hierzu stellt die Ausführung nach den kennzeichnenden Merkmalen des Anspruchs 1 dar.

Diese Lösung beruht auf dem Gedanken, die radiale Zentrierung allein durch die Verbindung zwischen der Elektromotor-Abtriebswelle und der diese aufnehmenden Hohlwelle des Getriebes zu bewirken. Zu diesem Zweck ist die Hohlwelle über ein an dem Aufnahmebereich angebrachtes Wälzlager entsprechend genau und stabil innerhalb des Getriebegehäuses gelagert. Dabei ist eine Ausführung der Hohlwelle zur kraftschlüssigen Aufnahme der Motorabtriebswelle nach Anspruch 2 besonders vorteilhaft.

Des weiteren soll ein solches Getriebe in einer unverändert bleibenden Grundausführung an Elektromotoren mit unterschiedlichen Anschlußgeometrien, d.h. verschiedenen Abtriebswellendurchmessern und Flanschausführungen anschließbar sein.

Erreicht wird dies mit den Ausgestaltungen nach den Ansprüchen 3 und 4.

Die fehlende radiale Zentrierung zwischen Flansch und Elektromotorgehäuse ist bei der Ausführung nach Anspruch 3 besonders vorteilhaft. Denn in diesem Fall entfallen insgesamt vier Zentrierflächen, da eine solche Ausgleichsplatte bei einer zentrierten Verbindung an jeder ihrer Stirnseiten gegenüber der jeweiligen Anlagefläche, d.h. dem Getriebegehäuse einerseits und dem Elektromotorgehäuse andererseits zentriert sein müßte.

Bei der Verwendung einer Ausgleichsplatte mit lediglich planen Stirnseiten als Anlageflächen ist diese einfach und sehr genau bezüglich der Parallelität ihrer Stirnseiten herstellbar. Wesentlich komplizierter und aufwendiger ist es, wenn diese Platte nicht nur planparallel, sondern zusätzlich auch noch mit radialen Zentrierflächen gefertigt werden müßte. Denn hierzu müßte die Platte für den Einsatz unterschiedlicher Bearbeitungswerkzeuge umgespannt werden. Auch wäre gegenüber einer nur planparallelen Platte zusätzlicher Meßaufwand zur Fertigungskontrolle erforderlich.

Mit den Ausführungen nach den Ansprüchen 3 und 4 ist eine äußerst rationelle Bereitstellung von Getrieben für Elektromotoren mit unterschiedlichen Anschlußgeometrien möglich.

Die Ausgleichsplatte besitzt in der Regel in allen Fällen die gleiche Dicke. Eine solche Ausgleichsplatte wird umfangsmäßig auf die jeweils unterschiedlichen Geometrien des Elektromotor-Abtriebsflansches angepaßt. Dies ist auf recht einfache Weise ohne Veränderung der Getriebegrundausführung möglich. In der motorseitigen Anlagefläche der Ausgleichsplatte können auch auf den Einzelanbaufall abgestimmte Ausnehmungen für ein radial unzentriertes Aufnehmen eines an dem Abtriebsflansch des Elektromotors für andere Einbauzwecke vorhandenen Zentrierbundes eingearbeitet werden.

Die als Steckhülse ausgebildete Hohlwelle ist bei der Getriebegrundausführung in ihren Abmessungen so gestaltet, daß sie sowohl längen- als auch durchmessermäßig praktisch jede Motorwelle von gewöhnlich an solche Getriebe anflanschbaren Elektromotoren aufnehmen kann. Längenmäßig ist dies unproblematisch, da die Aufnahmelänge lediglich auf eine beliebig vorgebbare Maximallänge einer gerade noch aufnehmbaren Motor-Abtriebswelle auszulegen ist. Kürzere Wellen füllen den Aufnahmebereich dann längenmäßig einfach nur noch teilweise aus.

Durchmessermäßig ist jedoch für besondere Ausgleichsmaßnahmen zu sorgen. Dies geschieht durch den vorgeschlagenen Einsatz von Ausgleichshülsen bei einer auf die Aufnahme einer Welle mit einem beliebig vorgegebenen maximalen Außendurchmesser ausgelegten Hohlwellengrundbohrung. Damit ist das Grundgetriebe durch lediglich den Einsatz unterschiedlicher Ausgleichshülsen ohne weiteres an Elektromotoren mit in einem vorgegebenen Umfang beliebig großen Wellendurchmessern anflanschbar. Im Unterschied zu der Hohlwelle sind die Ausgleichshülsen einfach und damit auch in geringen Stückzahlen kostengünstig herstellbar. Sie können entweder in einer Vielzahl von Ausführungsvarianten auf Lager gehalten oder von Fall zu Fall für einen bestimmten Anwendungsfall für ein bereits vorhandenes, insbesondere auf Lager gehaltenes Grundgetriebe, hergestellt werden. Das gleiche gilt für die erfindungsgemäßen Ausgleichsplatten.

Damit können gleiche Getriebegrundgehäuse in großen Stückzahlen und damit kostengünstig hergestellt und lediglich durch unterschiedliche Ausgleichsplatten und Ausgleichshülsen den jeweiligen konkreten Anwendungsfällen angepaßt werden.

Selbst die Getriebelänge ist durch lediglich eine einfache Dickenänderung der Ausgleichsplatte sowie einen Austausch der Hohlwelle bei im übrigen gleicher Getriebegrundausführung äußerst rationell veränderbar.

Ein Ausführungsbeispiel der Erfindung ist in der Zeichnung dargestellt.

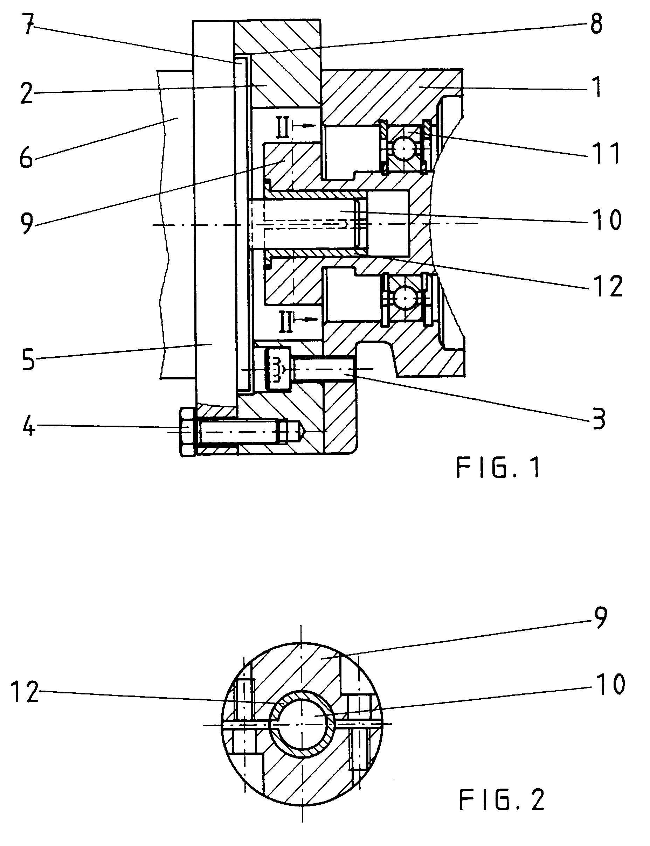

Es zeigen
- Fig. 1: einen Längsschnitt durch den Anbindungsbereich eines an einen Elektromotor angeflanschten Planetengetriebes,
- Fig. 2: einen Schnitt durch den Steckhülsen-Abschnitt einer die Abtriebswelle des Elektromotors aufnehmenden Getriebe-Hohlwelle nach Linie II-II.

Das Gehäuse 1 eines Planetengetriebes ist über eine Ausgleichsplatte 2 an einen Elektromotor 6 angeflanscht. Dabei ist die Ausgleichsplatte 2 einerseits über Schrauben 3 mit dem Getriebegehäuse 1 und andererseits über Schrauben 4 mit dem Gehäuse des Elektromotors 6 verbunden.

Die Ausgleichsplatte 2 liegt lediglich plan an der betreffenden Gegenfläche des Elektromotors 6 an. Eine radiale Zentrieung der Ausgleichsplatte 2 gegenüber dem Abtriebsflansch 5 des Elektromotors 6 ist nicht gegeben. Um eine solche bei einem einen Zentrierbund 7 aufweisenden Abtriebsflansch 5 eines Elektromotors 6 zu vermeiden, ist motorseitig eine Ausnehmung 8 in die Ausgleichsplatte 2 eingearbeitet. Auch gegenüber dem Gehäuse 1 des Planetengetriebes liegt die gegenüber diesem auswechselbare Ausgleichsplatte 2 nur plan an. Auswechselbar ist die Ausgleichsplatte 2, um unterschiedliche Anbaugeometrien verschiedenartiger Elektromotoren 6 ausgleichen zu können. Die hierfür notwendigen unterschiedlichen Ausgleichsplatten 2 weisen jeweils nur verschiedene Außenabmessungen bei sonst grundsätzlich gleicher Breite, d. h. Dicke auf.

Damit kann die Außenkontur einer Ausgleichsplatte jeweils leicht der entsprechenden Kontur des Motor-Abtriebsflansches 5 angepaßt werden. Auch das Vorsehen einer weiter oben beschriebenen Ausnehmung 8 zur radial zentrierfreien Aufnahme eines Elektromotor-Abtriebsflansches 5 mit einem daran für andere Anbauzwecke vorhandenen Zentrierbund 7 ist auf diese Weise einfach herstellbar.

Die radiale Zentrierung zwischen dem Planetengetriebe-Gehäuse 1 und dem Elektromotor 6 wird ausschließlich über die in eine Antriebs-Hohlwelle 9 des Planetengetriebes eingreifende Abtriebswelle 10 des Elektromotors 6 erzeugt. Hierzu ist die Hohlwelle 9 in dem Gehäuse 1 des Planetengetriebes zentrisch stabil über ein Wälzlager 11 gelagert. Die Hohlwelle 9 selbst ist als spannbare radial geschlitzte Steckhülse ausgebildet, um die Abtriebswelle 10 paßgenau kraftschlüssig aufnehmen zu können.

Um ein Getriebe-Grundgehäuse mit jeweils gleicher Hohlwelle 9 an Elektromotoren 6 mit durchmessermäßig unterschiedlichen Abtriebswellen 10 anschließen zu können, sind radial geschlitzte, unterschiedlich dicke Ausgleichshülsen 12 einsetzbar.

Für Elektromotoren 6 mit unterschiedlichen Abtriebsgeometrien sind somit jeweils gleiche Getriebe-Grundgehäuse mit jeweils nur unterschiedlicnen Ausgleichsplatten 2 und/oder Ausgleichshülsen 12 einsetzbar. Hierdurch ist eine sehr wirtschaftliche Herstellung und Lagerhaltung möglich.

## Patentansprüche

1. An einen Elektromotor angeflanschtes Getriebe, insbesondere spielarmes Planetengetriebe, mit einer Hohlwelle (9) zur kraftschlüssigen Aufnahme der Abtriebswelle (10) des Elektromotors (6), wobei die Hohlwelle (9) in ihrem Aufnahmebereich für die Abtriebswelle (10) des Elektromotors (6) zentrisch fixiert wälzgelagert ist,
**dadurch gekennzeichnet**,
daß die Stirnfläche des Getriebe-Flansches gegenüber der Anlagefläche des Elektromotors (6) radial zentrierungsfrei starr angeschlossen ist.

2. Getriebe nach Anspruch 1,
**dadurch gekennzeichnet**,
daß die Getriebe-Hohlwelle (9) eine radial geschlitzte Steckhülse für eine Klemmverbindung zwischen Hohlwelle (9) und Antriebswelle (10) ist.

3. Getriebe nach Anspruch 1 oder 2,
**dadurch gekennzeichnet**,
daß der an den Elektromotor (6) anzuschließende Getriebe-Flansch eine auswechselbar an dem Gehäuse (1) des Getriebes radial zentrierungsfrei befestigte Ausgleichsplatte (2) mit planparallel gegenüberliegenden Anlageflächen ist.

4. Getriebe nach einem der vorhergehenden Ansprüche,
**dadurch gekennzeichnet**,
daß in die Getriebe-Hohlwelle (9) bei Anschluß eines Elektromotors (6) mit einer Abtriebswelle (10) mit gegenüber der Hohlwelle (9) geringerem Durchmesser eine radial geschlitzte Ausgleichshülse (12) eingesetzt ist.

## Claims

1. Gear flanged onto an electric motor, especially low-backlash planetary gear, with a hollow shaft (9) for the non-positive reception of the output shaft (10) of the electric motor (6), the hollow shaft (9) being mounted on rolling bearings in a centrically fixed manner in its reception region for the output shaft (10) of the electric motor (6), characterized in that the end face of the gear flange is rigidly connected in a radially centering-free manner relative to the bearing surface of the electric motor (6).

2. Gear according to claim 1, characterized in that the gear hollow shaft (9) is a radially slotted plug-in sleeve for a clamping connection between the hollow shaft (9) and driveshaft (10).

3. Gear according to claim 1 or 2, characterized in that the gear flange to be connected to the electric motor (6) is a compensating plate (2) exchangeably fastened in a radially centering-free manner to the case (1) of the gear and having bearing surfaces located plane-parallel opposite one another.

4. Gear according to one of the preceding claims, characterized in that a radially slotted compensating sleeve (12) is inserted into the gear hollow shaft (9) when an electric motor (6) with an output shaft (10) having a diameter smaller than that of the hollow shaft (9) is connected.

## Revendications

1. Engrenage bridé sur un moteur électrique, planétaire sans jeu en particulier, comportant un arbre creux (9) pour recevoir par force d'adhérence l'arbre de sortie (10) du moteur électrique (6), l'arbre creux (9) étant fixé et centré par un palier à roulement dans sa zone de réception pour l'arbre de sortie (10) du moteur électrique (6), caractérisé en ce que la face frontale de la bride d'engrenage est bridée rigidement et sans centrage dans le sens radial par rapport à la surface d'appui du moteur électrique (6).

2. Engrenage suivant la revendication 1, caractérisé en ce que l'arbre creux (9) de l'engrenage est un manchon fendu dans le sens radial pour une jonction par serrage entre l'arbre creux (9) et l'arbre de sortie (10).

3. Engrenage suivant l'une des revendications 1 et 2, caractérisé en ce que la bride d'engrenage, à brider sur le moteur électrique (6), est une plaque de compensation (2) interchangeable, fixée sans centrage dans le sens radial sur le carter (1) de l'engrenage, et munie de surfaces d'appui opposées parallèles et planes.

4. Engrenage suivant l'une des revendications précédentes, caractérisé en ce qu'une douille de compensation (12), fendue dans le sens radial, est utilisée dans l'arbre creux (9) de l'engrenage, pour le bridage d'un moteur électrique (6) muni d'un arbre de sortie (10) d'un diamètre inférieur à celui de l'arbre creux (9).
